# EUROPÄISCHE PATENTSCHRIFT

(11) **EP 2 355 993 B1**
(45) Veröffentlichungstag und Bekanntmachung des Hinweises auf die Patenterteilung: **19.09.2012**
(21) Anmeldenummer: 09753112.3
(22) Anmeldetag: 18.11.2009
(51) Int. Cl.: B60K 1/02, B60K 6/26, B60K 17/22, H02K 7/00, F02N 11/04, F16F 15/12, F02N 15/06, F16F 15/14

(54) **ANTRIEBSSTRANG FÜR EIN KRAFTFAHRZEUG**
DRIVE TRAIN FOR A MOTOR VEHICLE
CHAÎNE CINÉMATIQUE POUR VÉHICULE À MOTEUR

(30) Priorität: 10.12.2008 DE 102008054475
(43) Veröffentlichungstag der Anmeldung: 17.08.2011
(73) Patentinhaber: ZF Friedrichshafen AG, 88038 Friedrichshafen (DE)
(72) Erfinder: HOFFMANN, Rayk, 88048 Friedrichshafen (DE); SCHELL, Oliver, 88212 Ravensburg (DE); IRLBACHER, Wolfgang, 88069 Tettnang (DE); LAMKE, Martin, 88213 Ravensburg (DE); GNANDT, Thomas, 88263 Horgenzell (DE)
(86) Internationale Anmeldenummer: PCT/EP2009/065352
(87) Internationale Veröffentlichungsnummer: WO 2010/066545

(56) Entgegenhaltungen:
- DE-A1- 4 215 441
- DE-C1- 19 631 384
- DE-T2- 60 212 769
- US-A1- 2004 248 479

## Beschreibung

Die Erfindung betrifft einen Antriebsstrang für ein Kraftfahrzeug, der zumindest aus einer drehbaren Antriebswelle und einer E-Maschine besteht. Die E-Maschine umfasst hierbei einen gehäusefesten Stator und einen zumindest zweiteilig ausgeführten Rotor, wobei das erste Rotorteil mit der Antriebswelle direkt gekoppelt ist und das zweite Rotorteil mit dem Stator direkt antreibbar ist. Dabei ist das erste Rotorteil mit dem zweiten Rotorteil drehmomentübertragbar und gegeneinander verkippbar gekoppelt.

Aus der gattungsbildenden DE 196 31 384 C1 ist ein Antriebsstrang mit einem zweiteiligen Rotor bekannt, bei welchem zwischen den Rotorteilen eine Schwingungsisolierung angeordnet ist, die eine Übertragung von antriebsseitig erzeugten Drehmomentschwankungen auf eine Abtriebsseite weitgehend verhindert. Der Antriebsstrang verfügt zudem über einen verbrennungsmotorisch betriebenen Antriebsmotor, dessen Kurbelwelle über einen Träger direkt mit dem von dem Stator antreibbaren Rotorteil verbunden ist. Schwingungen, die bekanntermaßen von einem derartigen Antriebsmotor erzeugt werden, werden somit direkt auf die E-Maschine übertragen, wodurch Schwankungen in der Ausrichtung des Rotors zu dem Stator auftreten können, welche negative Auswirkungen auf die Leistungsfähigkeit der E-Maschine haben.

Die EP 1 243 788 A1 offenbart einen weiteren Antriebsstrang für ein Kraftfahrzeug, wobei ein Rotor einer E-Maschine einteilig ausgeführt ist und über eine gehäusefeste Rotorlagerung drehbar gelagert ist. Der Rotor ist zudem direkt mit einer über zwei Wellenlagerungen in einem Gehäuse drehbar abgestützten Antriebswelle eines Vorgelegegetriebes gekoppelt. Die Antriebswelle ist somit effektiv über drei Lagerungen statisch überbestimmt abgestützt, nämlich über die beiden Wellenlagerungen und über die Rotorlagerung. Dies kann im Betrieb des Antriebsstrangs, wenn die Antriebswelle durch eine Drehmomentübertragung von der Antriebswelle auf die Vorgelegewelle des Getriebes elastisch gebogen wird und auf den Rotor hierdurch Kippkräfte wirken, zu einer starken mechanischen Belastung der Rotorlagerung führen.

Aus der DE 199 43 037 A1 ist des Weiteren ein Fahrzeugantriebsstrang mit einer Motoranordnung einer E-Maschine bekannt, welche sich gegenüber einer Statoranordnung der E-Maschine auch unter Taumelbewegungen einer Antriebswelle selbständig ausrichtet. Hierzu ist die Rotorenanordnung über eine elastische Verbindungsanordnung mit der Antriebswelle verbunden. Eine derartige elastische Verbindungsanordnung stellt jedoch ein schwingungsfähiges System dar, wodurch Schwingungen der Antriebswelle die selbständige Ausrichtung der Rotoranordnung gegenüber der Statoranordnung stören können.

Aus der US 2004/248479 A1 schließlich ist eine Antriebseinrichtung mit einem Elektromotor bekannt, der sich an der Unterseite eines Schiffsrumpfes befindet Damit die Antriebseinrichtung Schockbelastungen standhalten kann, ist der Stator des Elektromotors über Drehlager am Rotor fixiert.

Aufgabe der Erfindung ist es daher einen Antriebsstrang der genannten Art bereitzustellen, welcher unempfindlich gegenüber eingeleiteten Schwingungen und gegenüber einer Biegung der Antriebswelle ist.

Diese Aufgabe wird durch einen Antriebsstrang gemäß den Merkmalen des ersten Patentanspruchs gelöst. Er enthält die technische Lehre, dass das zweite Rotorteil von einer gehäusefesten Rotorlagerung drehbar gestützt und gegenüber dem Stator ausgerichtet ist.

Das zweite Rotorteil wird somit durch die vorgeschlagene Rotorlagerung gegenüber dem Stator fixiert, was die Auswirkung von Schwingungen auf die E-Maschine reduziert, und durch die verkippbare Koppelung der beiden Rotorteile wirkt sich eine Verkippung der Antriebswelle auf den zweiten Rotorteil und dessen Lagerung nicht aus, wobei gleichzeitig eine Drehmomentübertragung zwischen den Rotorteilen möglich ist. Der hierdurch bereitgestellte Antriebsstrang ist daher gegenüber Schwingungen und gegenüber einer Biegung der Antriebswelle äußerst unempfindlich.

Das erste und zweite Rotorteil sind grundsätzlich nicht ausschließlich als einteilig ausgeführte Bauteile zu verstehen. Vielmehr können das erste und/oder das zweite Rotorteil jeweils auch aus mehreren Bauteilen bestehen, welche insbesondere über Schraub-, Schweiß- oder Nietverbindungen unmittelbar miteinander verbunden sind.

Der Antriebsstrang weist neben der E-Maschine einen elektrisch oder thermodynamisch betriebenen Antriebsmotor auf, wodurch der Antriebsstrang durch zwei redundante Antriebssysteme antreibbar ist oder im Sinne eines Hybridantriebsstrangs antreibbar ist. Unter einem thermodynamisch betriebenen Antriebsmotor kann hierbei jegliche Art von Motor verstanden werden, welcher Bewegungsenergie oder ein Drehmoment über Ausnutzung thermodynamischer Effekte erzeugt, beispielsweise ein Otto- oder Dieselmotor oder Mischformen hiervon, oder eine Dampf- oder Gasturbine. Ein elektrisch betriebener Antriebsmotor oder die E-Maschine kann hierbei jegliche Art von Motor sein, welcher elektrische oder elektromagnetische Effekte ausnutzt, um Bewegungsenergie oder ein Drehmoment zu erzeugen. Der elektrische Antriebsmotor und die E-Maschine können daher beispielsweise Drehstrom-, Wechselstrom- oder Schrittmotoren sein. Hierbei ist hervorzuheben, dass die E-Maschine bevorzugt sowohl motorisch als auch generatorisch betrieben werden kann, wodurch dem Antriebsstrang über die E-Maschine sowohl in einem Antriebsbetrieb Bewegungsenergie zuführbar ist, als auch in einem Rekuperationsbetrieb Bewegungsenergie entnommen werden kann, um diese in einem Energiespeicher für einen späteren Antriebsbetrieb zu speichern.

Zwischen dem Antriebsmotor und der Abtriebswelle kann dabei eine Kupplung, bevorzugt eine Anfahrkupplung, vorgesehen sein, welche in einem geschlossenen Zustand ein Drehmoment des Antriebsmotors auf die Antriebswelle überträgt und in einem geöffneten Zustand kein Drehmoment von dem Antriebsmotor auf die Antriebswelle überträgt, wodurch der Antriebsmotor von dem Rest des Antriebsstrangs trennbar ist. Alternativ kann der Antriebsmotor auch direkt mit der Antriebswelle gekoppelt sein, beispielsweise indem eine Kurbelwelle eines verbrennungsmotorisch betriebenen Antriebsmotors mit der Antriebswelle direkt verbunden ist oder einstückig mit der Antriebswelle ausgeführt ist.

In einer bevorzugten Ausgestaltung der Erfindung ist in dem Rotor der E-Maschine ein Torsionsschwingungsdämpfer angeordnet, der Drehungleichförmigkeiten oder Drehmomentspitzen der E-Maschine abmildert, bevor diese auf die Antriebswelle übertragen werden, oder der Drehungleichförmigkeiten oder Drehmomentspitzen der Antriebswelle abmildert, bevor diese gänzlich in die E-Maschine geleitet werden. In beiden Fällen ergibt sich eine Reduzierung der mechanischen Belastung des Antriebsstrangs, wodurch sich dessen Lebensdauer in positiver Weise erhöht.

In weiteren vorteilhaften Ausgestaltungen der Erfindung, werden die beiden Rotorteile über zumindest ein Verbindungelement, ein weiteres Verbindungselement, eine Flexplate, eine Verzahnung oder ein gummielastisches Bauteil gekoppelt.

Im Folgenden wird die Erfindung anhand von Zeichnungen näher erläutert, aus welchen weitere vorteilhafte Ausgestaltungen entnommen werden können. Die Figuren zeigen jeweils in schematischer Darstellung:
- Fig. 1: einen Antriebsstrang, bei welchem ein Antriebsmotor über eine Kupplung mit einer Antriebswelle gekoppelt ist, wobei die Antriebswelle als Eingangswelle eines Getriebes vom Typ eines Vorgelegegetriebes dient und die Rotorteile über Verbindungselemente miteinander gekoppelt sind;
- Fig. 2: eine Frontalansicht der Koppelung der Rotorteile aus Fig. 1;
- Fig. 3: eine Frontalansicht einer Koppelung eines ersten Rotorteils und eines zweiten Rotorteils über eine Verzahnung;
- Fig. 4: den Antriebsstrang aus Fig. 1 mit einer durchbogenen Antriebswelle;
- Fig. 5: einen Antriebsstrang mit einem zweigeteilten Rotor, dessen Rotorteile über ein Verbindungselement entsprechend Fig. 2 und über weitere Verbindungselemente gekoppelt sind;
- Fig. 6: eine Frontalansicht der Koppelung des ersten und zweiten Rotorteils aus Fig. 5;
- Fig. 7: einen Antriebsstrang mit einem zweigeteilten Rotor, dessen Rotorteile über eine Flexplate gekoppelt sind;
- Fig. 8: einen Antriebsstrang, bei welchem ein Antriebsmotor direkt mit einer Antriebswelle gekoppelt ist und ein Rotor einer E-Maschine über Torsionsschwingungsdämpfer verfügt.

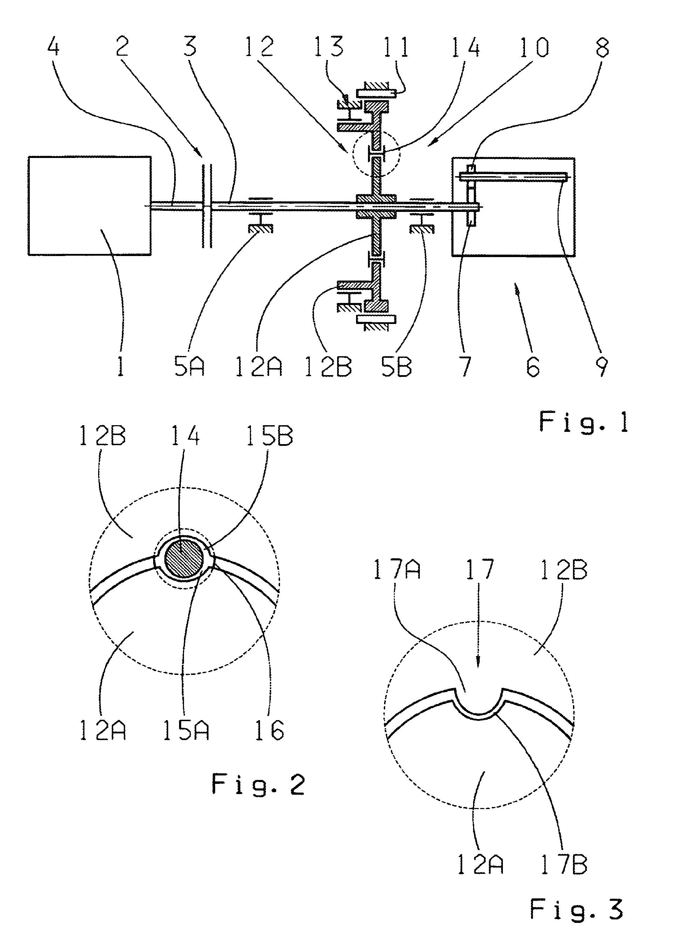

In Fig. 1 ist der Antriebsmotor 1 über die Kupplung 2, welche als reibschlüssige Anfahrkupplung dient, mit der Antriebswelle 3 gekoppelt. Im geschlossenen Zustand der Kupplung 2 wird somit ein von dem Antriebsmotor 1 erzeugtes Drehmoment von einer Motorausgangswelle 4 über die Kupplung 2 auf die Antriebswelle 3 des Antriebsstrangs übertragen. Im geschlossenen Zustand ist über die Kupplung 2 hingegen kein Drehmoment von dem Antriebsmotor 1 auf die Antriebswelle 3 übertragbar. Die Antriebswelle 3 ist über zwei gehäusefeste Wellenlagerungen 5A, 5B drehbar gelagert und dient als eine Eingangswelle eines Getriebes 6 vom Typ eines Vorgelegegetriebes, wozu auf der Antriebswelle 3 ein Zahnrad 7 drehfest angeordnet ist, weiches ein Drehmoment von der Antriebswelle 3 auf ein Zahnrad 8 einer Vorgelegewelle 9 des Getriebes 6 überträgt.

Um die Antriebswelle 3 herum ist die E-Maschine 10 angeordnet, welche über einen gehäusefesten Stator 11 und einen zweigeteilten Rotor 12 verfügt. Das erste Rotorteil 12A ist dabei direkt mit der Antriebswelle 3 zumindest drehfest gekoppelt und das zweite Rotorteil 12B ist direkt mit dem Stator 11 antreibbar und über eine gehäusefeste Rotorlagerung 13 drehbar abgestützt und in seiner Position gegenüber dem Stator 11 fixiert. Das zweite Rotorteil 12B verfügt somit je nach Art der verwendeten E-Maschine 10 über Dauermagneten, Spulen oder elektrische Leiter, welche zusammen mit dem Stator 11 den zweiten Rotorteil 12B direkt antreiben. Die Rotorfagerung 13 und die Wellenlagerungen 5A, 5B können beliebig gewählt werden, bevorzugt sind Gleit- oder Wälzlager zu verwenden, welche in schwimmender, X-, **O-** oder Fest-Los-Anordnung angewendet werden können. Die Koppelung des ersten Rotorteils 12A mit der Antriebswelle 3 kann beliebig, jedoch ein Drehmoment übertragend ausgeführt sein, beispielsweise über bekannte und hierzu geeignete Welle-Naben-Verbindungen. Von besonderem Vorteil, da besonders kostengünstig, ist es, wenn das erste Rotorteil 12A stoff- oder kraftschlüssig mit der Antriebswelle 3 verbunden ist. Des Weiteren kann das erste Rotorteil 12A einstückig mit der Antriebswelle 3 ausgeführt sein, wodurch die Antriebswelle 3 und das erste Rotorteil 12A, ebenfalls besonders kostengünstig, in einem gemeinsamen Herstellungsprozess, beispielsweise durch Gesenkschmieden, herstellbar sind.

Die Rotorteile 12A, 12B sind in Fig. 1 über zylinderförmige Verbindungselemente 14 gegeneinander verkippbar und drehmomentübertragbar gekoppelt, von welchen eines in Fig. 2 näher dargestellt ist. Fig. 2 ist hierbei eine Frontalansicht des in Fig. 1 durch den gestrichelten Kreis markierten Bereich.

Die Fig. 2 zeigt einen äußeren Umfang des ersten Rotorteils 12A, welcher einem inneren Umfang des zweiten Rotorteils 12B gegenüberliegt. Zwischen dem inneren Umfang und dem äußeren Umfang besteht Spiel, welches eine eingeschränkte Verkippung des ersten Rotorteils 12A gegenüber dem zweiten Rotorteil 12B und eine Verschiebung des ersten Rotorteils 12A gegenüber dem zweiten Rotorteil 12B entlang der Zeichenebene erlaubt. Das erste Rotorteil 12A weist dabei an seinem äußeren Umfang eine erste Vertiefung 15A auf, welche einer zweiten Vertiefung 15B des zweiten Rotorteil 12B an dessen inneren Umfang gegenüberliegt. In die Vertiefungen 15A, 15B ragt dabei das Verbindungselement 14, welches gegenüber den Vertiefungen 15A, 15B Spiel aufweist. Damit das Verbindungselement 14 nicht aus den Vertiefungen 15A, 15B herausfallen kann, verfügt es zudem über scheibenförmige Enden 16, welche die Vertiefungen 15A, 15B überdecken. Durch das Spiel des Verbindungselements 14 in den Vertiefungen 15A, 15B können die Rotorteile 12A, 12B weiterhin gegeneinander verkippen und gegeneinander entlang der Zeichenebene verschoben werden. Prinzipiell ist es dabei ausreichend, wenn das Verbindungselement 14 lediglich bezüglich einer der einander gegenüberliegenden Vertiefungen 15A, 15B Spiel aufweist, es kann dabei daher auch mit einem der Rotorteile 12A, 12B fest verbunden sein, beispielsweise indem es in eine der Vertiefungen 15A, 15B eingepresst ist.

Bei einer Relativbewegung des zweiten Rotorteils 12B gegenüber dem ersten Rotorteil 12A, beispielsweise wenn durch die E-Maschine 10 ein Drehmoment und eine Drehbewegung zum Antrieb des Antriebsstrangs erzeugt wird, wird das zweite Rotorteil 12B konzentrisch oder nahezu konzentrisch gegenüber dem ersten Rotorteil 12A gedreht, wodurch sich das Verbindungselement 14 an eine Flanke der Vertiefung 15A des ersten Rotorteils 12A und an eine dieser punktsymmetrisch durch das Verbindungselement 14 gegenüberliegenden Flanke der Vertiefung 15B des zweiten Kontaktelements 12B anlegt, woraufhin eine Drehmomentübertragung zwischen den Rotorteilen 12A, 12B möglich ist. Dementsprechend kann auch ein von der Antriebswelle 3 stammendes Drehmoment auf das zweite Rotorteil 12B übertragen werden, insbesondere für einen generatorischen Betrieb der E-Maschine 10. Das Spiel zwischen den Rotorteilen 12A, 12B und das Spiel zwischen dem Verbindungselement 14 und den Vertiefungen 15A, 15B sollte dabei so gewählt werden, dass die Rotorteile 12A, 12B bei einer maximalen Verkippung des ersten Rotorteils 12A gegenüber dem zweiten Rotorteil 12B unter Betriebsbedingungen des Antriebsstrangs noch nicht unmittelbar aneinander anliegen und dass das Verbindungselement 14 nicht alleine durch eine gegenseitige Verkippung der Rotorteile 12A, 12B in den Vertiefungen 15A, 15B fest eingeklemmt wird.

Fig. 3 zeigt den gleichen Bereich eines Antriebsstrangs wie Fig. 2, der sich gegenüber dem Antriebsstrang aus Fig. 1 und Fig. 2 jedoch dadurch unterscheidet, dass das erste und zweite Rotorteil 12A, 12B über eine spielbehaftete Verzahnung 17 miteinander gekoppelt sind. Hierbei weist das zweite Rotorteil 12B an seinem inneren Umfang einen Zahn 17A auf, welcher in eine Mulde 17B an dem äußeren Umfang des ersten Rotorteils 12A unter Spiel eingreift. Es können dabei beliebig viele Zähne 17A und Mulden 17B in den Rotorteilen 12A, 12B ineinandergreifend angeordnet sein, wobei hier ebenfalls für den Fachmann klar ist, dass das Spiel der beiden Rotorteile 12A, 12B und der Verzahnung 17 derart bemessen sein muss, dass die Rotorteile 12A, 12B bei einer maximalen Verkippung des ersten Rotorteils 12A gegenüber dem zweiten Rotorteil 12B unter den Betriebsbedingungen des Antriebsstrangs nur über die Verzahnung 17 unmittelbar aneinander anliegen. Die Form des Zahnes 17A beziehungsweise die Form der Mulde 17B kann dabei beliebig gewählt werden, beispielsweise können sie trapez-, evolventen-, konchoiden- oder zykloiden-förmig sein.

In einer bevorzugten Weiterbildung der Ausführungen der Erfindung gemäß Fig. 2 und 3 ist zwischen den beiden Rotorteilen 12A, 12B eine elastische, bevorzugt eine elastisch dämpfende Substanz angeordnet, welche das Spiel zumindest teilweise ausfüllt. Eine Übertragung eines Drehmoments bei einer Relativdrehung zwischen den beiden Rotorteilen 12A, 12B erfolgt hierdurch in vorteilhafter Weise nicht mehr ruckartig, ab dem Zeitpunkt ab dem die Rotorteilen 12A, 12B aufeinander prallen, beziehungsweise ab dem die Rotorteile 12A, 12B auf das Verbindungselement 14 prallen, sondern die Übertragung des Drehmoments erfolgt kontinuierlich, da die elastische Substanz den Aufprall abfedert und/oder dämpft. Besonders bevorzugt ist es dabei, wenn die Substanz formschlüssig an beiden Rotorteilen 12A, 12B anliegt, da damit eine Drehmomentübertragung zwischen den Rotorteilen 12A, 12B sofort zum Zeitpunkt der Relativdrehung der Rotorteile 12A, 12B einsetzt. Die elastische Substanz kann dabei beispielsweise in einem Spritzgussverfahren zwischen die Rotorteile 12A, 12B eingebracht werden. Insbesondere kann sie hülsenartig um das Verbindungselement 14 angeordnet sein, wobei sie das Spiel zwischen dem Verbindungselement 14 und den Rotorteilen 12A, 12B zumindest zum Teil füllt.

Die Substanz besteht besonders bevorzugt aus Gummi oder einem gummiartigen Material, wie beispielsweise einem synthetischen Kautschuk.

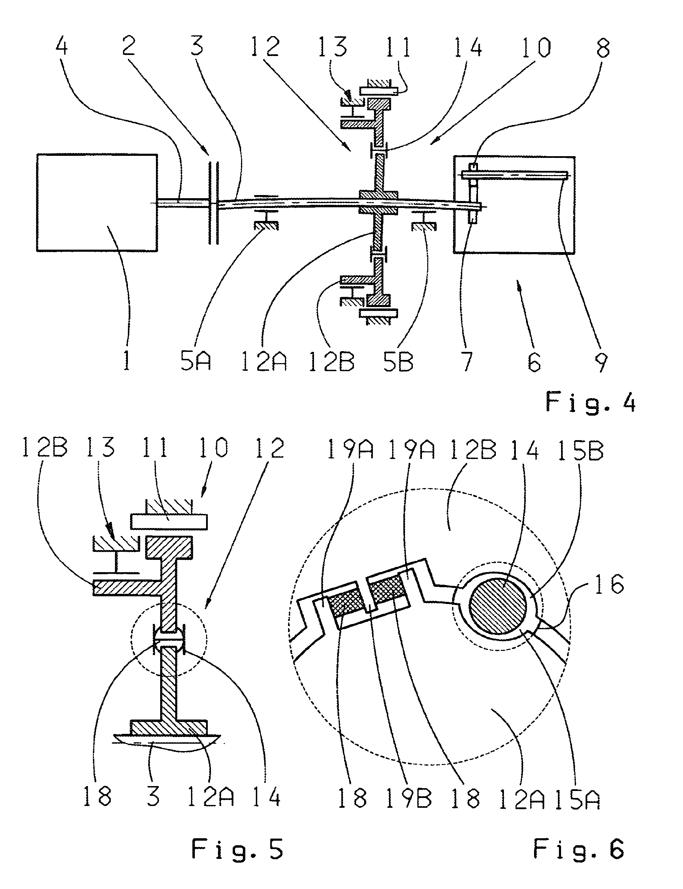

Fig. 4 zeigt den Antriebsstrang aus Fig. 1 in einem Betriebszustand, in welchem die Antriebswelle 3 durchbogen ist. Hierbei wird ein Drehmoment von dem Antriebsmotor 1 und/oder von der E-Maschine 10 auf die Antriebswelle 3 übertragen, welche das Drehmoment wiederum über die Zahnräder 7, 8 auf die Vorgelegewelle 9 des Getriebes 6 überträgt. Bei der Übertragung des Drehmomentes von dem Zahnrad 7 der Antriebswelle 3 auf das Zahnrad 8 der Vorgelegewelle 9 wird dabei eine Kraft erzeugt, welche die Zahnräder 7, 8 auseinandertreibt. Diese Kraft bewirkt eine Durchbiegung der Antriebswelle 3, wobei keine Biegungsamplitude in den beiden Wellenlagerungen 5A, 5B durch die gehäusefeste Abstützung vorliegt. Auf Grund der Durchbiegung der Antriebswelle 3 wird nun das direkt mit ihr gekoppelte erste Rotorteil 12A gegenüber dem zweiten Rotorteil 12B verkippt, auf welches durch die verkippbare Koppelung der beiden Rotorteile 12A, 12B selber jedoch keine oder nur eine sehr geringfügige verkippende Kraft ausgeübt wird. Somit wird die Rotorlagerung 13 des zweiten Rotorteils 12B nicht zusätzlich belastet und das zweite Rotorteil 12B bleibt gegenüber dem Stator 11 ausgerichtet. Gegebenenfalls in dem Antriebsstrang auftretende Schwingungen haben dabei durch die feste Ausrichtung des zweiten Rotorteils 12B gegenüber dem Stator 11 keine negativen Auswirkungen auf die E-Maschine 10. Während der Verkippung der Rotorteile 12A, 12B ist über deren drehmomentübertragenden Koppelung somit ein störungsfreier Betrieb der E-Maschine 10 im motorischen oder generatorischen Sinn möglich.

Fig. 5 zeigt eine geschnittene Hälfte eines Antriebsstrangs mit der Rotorlagerung 13, der Antriebswelle 3 und der E-Maschine 10, bestehend aus dem Stator 11 und dem Rotor 12 mit den beiden Rotorteilen 12A, 12B, wobei das erste Rotorteil 12A mit dem zweiten Rotorteil 12B über die in Fig. 6 gezeigten Verbindungselemente 14 und über weitere Verbindungselemente 18 verkippbar und drehmomentübertragbar gekoppelt ist.

Fig. 6 zeigt hierbei eine Frontalansicht des in Fig. 5 durch eine unterbrochene Linie markierten Bereichs, in dem ein Verbindungselement 14 und zwei weitere Verbindungselemente 18 angeordnet sind. Über die zwischen den Rotorteilen 12A, 12B angeordneten weiteren Verbindungselemente 18 wird dabei eine Relativdrehung zwischen den Rotorteilen 12A, 12B, je nach Ausgestaltung der weiteren Verbindungselemente 18, abgedämpft oder abgefedert. Das Verbindungselement 14 und die Vertiefungen 15A, 15B sind hierbei analog in Anordnung, Form und Funktion zu dem Verbindungselement 14 und den Vertiefungen 15A, 15B aus Fig. 2. Gegebenenfalls können die Verbindungselemente 14 hierbei auch weggelassen werden, wodurch die Rotorteile 12A, 12B ausschließlich über die weiteren Verbindungselemente 18 drehmomentübertragbar und gegeneinander verkippbar gekoppelt sind.

Der erste Rotorteil 12A weist gemäß Fig. 6 zumindest zwei nasenförmige Ausformungen 19A auf, zwischen welche eine nasenförmige weitere Ausformung 19B des zweiten Rotorteils 12B hineinragt. Zwischen den Ausformungen 19A, 19B sind die weiteren Verbindungselemente 18 in Umfangsrichtung der Rotorteile 12A, 12B wirkend und an den Seitenflächen der Ausformungen 19A, 19B der Rotorteile 12A, 12B anliegend angeordnet. Bei einer Relativdrehung der Rotorteile 12A, 12B, beispielsweise auf Grund einer Drehung der Antriebswelle 3 und des ersten Rotorteils 12A gegenüber dem zweiten Rotorteil 12B, wird zumindest jeweils eines der weiteren Verbindungselemente 18 gestaucht. Das andere der weiteren Verbindungselemente 18 wird hingegen gestreckt, gemäß dem Fall, dass die weiteren Verbindungselemente 18 mit den Ausformungen 19A, 19B fest verbunden sind. Falls die weiteren Verbindungselemente 18 dabei als Dämpferelemente ausgebildet sind, wird somit die Relativdrehung der Rotorteile 12A, 12B abgedämpft oder falls die weiteren Verbindungselemente 18 dabei als Federelemente ausgebildet sind, wird die Relativdrehung der Rotorteile 12A, 12B abgefedert. Als Dämpferelemente wirkend können die weiteren Verbindungselemente 18 insbesondere als bekannte Hydraulikdämpfer ausgeführt sein und als Federelement wirkend können die weiteren Verbindungselemente 18 insbesondere als Schrauben-Druckfedern, Ringfedern oder Tellerfedern ausgeführt sein. Die weiteren Verbindungselemente 18 können auch als kombinierte Feder-Dämpferelemente ausgeführt sein, beispielsweise indem Hydraulikdämpfer mit Schrauben-Druckfedern kombiniert sind oder indem die weiteren Verbindungselemente 18 zumindest zum Teil aus elastischem und dämpfendem Gummi oder einem elastischen und dämpfenden gummiartigen Material, wie zum Beispiel einem synthetischen Kautschuk, besteht. Die weiteren Verbindungselemente 18 wirken, falls diese zumindest als Federelemente ausgeführt sind, im Sinne einer zwischen den Rotorteilen 12A, 12B angeordneten Drehfederung, welche Drehungleichförmigkeiten oder Drehmomentstöße zwischen den beiden Rotorteilen 12A, 12B abfedert und somit in vorteilhafter Weise die Bauteilbelastung des Antriebsstrangs reduziert. Falls die weiteren Verbindungselemente 18 hingegen zumindest als Dämpferelemente ausgeführt sind, wirken die weiteren Verbindungselemente 18 im Sinne eines Torsionsschwingungsdämpfers, welcher Drehungleichförmigkeiten oder Drehmomentstöße zwischen den beiden Rotorteilen 12A, 12B abdämpft und damit ebenfalls in vorteilhafter Weise die Bauteilbelastung des Antriebsstrangs reduziert. Zwischen dem ersten und dem zweiten Rotorteil 12A, 12B kann alternativ auch zumindest eine Spiralfeder angeordnet sein, welche im Sinne einer Drehfederung wirkt.

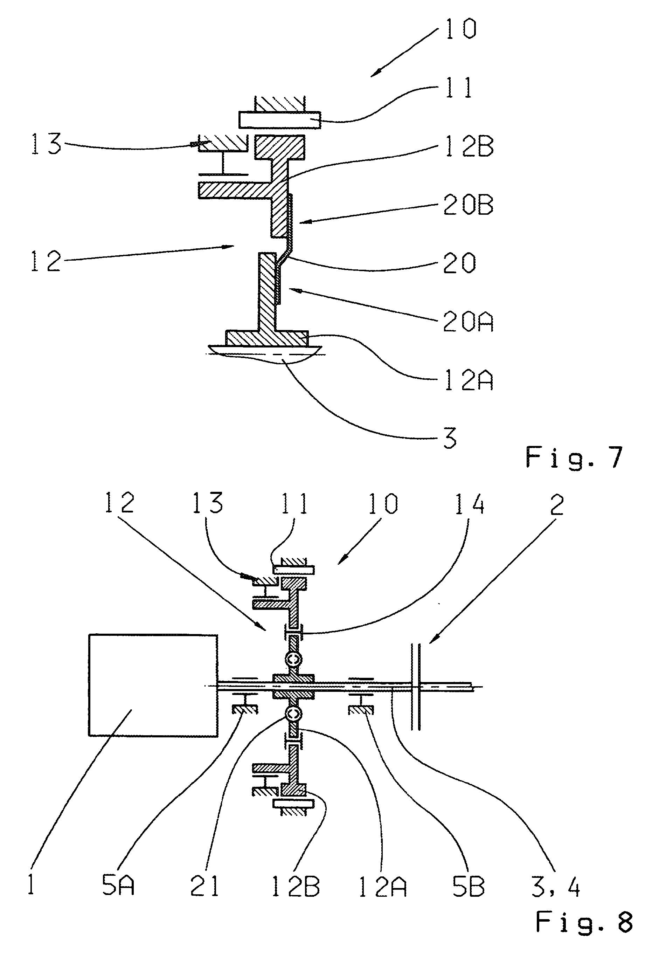

Fig. 7 zeigt einen Antriebsstrang gemäß Fig. 5, wobei die beiden Rotorteile 12A, 12B über eine Flexplate 20, statt über Verbindungselemente 14 und weitere Verbindungselemente 18, gekoppelt sind. Derartige Flexplates sind beispielsweise bekannt, um einen Achsversatz oder eine Achsverschränkung zwischen einem Antriebsmotor und einem Getriebe in einem Fahrzeugantriebsstrang auszugleichen, wobei über eine solche Flexplate ein Drehmoment von dem Antriebsmotor auf das Getriebe übertragbar ist. Die Flexplates können dabei sowohl einteilig als auch mehrteilig ausgeführt sein. Die in Fig. 7 gezeigte Flexplate 20 ist einteilig und tellerförmig ausgebildet, wobei sie an einer eingeprägten Vertiefung in einem inneren Bereich 20A mit dem ersten Rotorteil 12A zumindest drehfest verbunden ist und wobei sie über einen Rand an einem äußeren Bereich 20B mit dem zweiten Rotor-teil 12B zumindest drehfest verbunden ist. Die Verbindung der Flexplate 20 mit den Rotorteilen 12A, 12B kann insbesondere über eine Verschraubung, Vernietung oder über Schweißstellen erfolgen. Bei einer Verkippung der Antriebswelle 3 und somit einer Verkippung des ersten Rotorteils 12A gegenüber dem zweiten Rotorteil 12B wird der innere Bereich 20A der Flexplate 20 mitgekippt, wobei der äußere Bereich 20B mit dem zweiten Rotorteil 12B über die Rotorlagerung 13 fixiert ist, wodurch sich die Flexplate 20 elastisch verformt. Die Elastizität der Flexplate 20 ist dabei derart bemessen, dass durch die Verkippung des inneren Bereichs 20A gegenüber dem äußeren Bereich 20B lediglich sehr geringe Kippkräfte von dem ersten Rotorteil 12A auf den zweiten Rotorteil 12B übertragen werden, wodurch die Rotorlagerung 13 durch die Verkippung des ersten Rotorteils 12A gegenüber dem zweiten Rotorteil 12B lediglich geringfügig belastet wird.

Alternativ zu der Flexplate 20 kann das erste und zweite Rotorteil 12A, 12B auch über ein gummielastisches Bauteil gekoppelt sein, welches mit den Rotorteilen 12A, 12B verbunden ist und welches die Verkippung des ersten Rotorteils 12A gegenüber dem zweiten Rotorteil 12B bei einer gleichzeitigen Fähigkeit zur Drehmomentübertragung gestattet. Ein derartiges gummielastisches Bauteil ist bevorzugt spritzgusstechnisch in einen Zwischenraum zwischen den Rotorteilen 12A, 12B eingebracht. Es bildet somit beispielsweise einen Ring, der sich zwischen einem äußeren Umfang des ersten Rotorteils 12A und einem inneren Umfang des zweiten Rotorteils 12B befindet. Zur besseren Drehmomentübertragung zwischen den Rotorteilen 12A, 12B und dem gummielastischen Bauteil sind dabei die Rotorteile 12A, 12B bevorzugt mit einer nicht ineinandergreifenden Verzahnung versehen, welche von dem gummielastischen Bauteil umschlossen ist, wodurch dieses formschlüssig mit den Rotorteilen 12A, 12B verbunden ist. Das gummielastische Bauteil hat gegenüber den in Fig. 2, Fig. 3 und Fig. 6 gezeigten Verbindungselementen 14 und weiteren Verbindungselementen 18 den Vorteil, dass es durch Spritzguss einfacher herstellbar und zwischen die Rotorteile 12A, 12B einbringbar ist. Es besteht ebenfalls bevorzugt aus Gummi oder einer gummiartigen Substanz, wie beispielsweise einem synthetischen Kautschuk.

Der in Fig. 8 dargestellte Antriebsstrang verfügt entsprechend dem Antriebsstrang aus Fig. 4 über den Antriebsmotor 1 und die E-Maschine 10, bestehend aus dem Stator 11 und dem aus zwei Rotorteilen 12A, 12B bestehenden Rotor 12, dessen zweiter Rotorteil 12B mit dem Rotorlager 13 gegenüber dem Stator 11 fix ausgerichtet ist. Der Antriebsstrang verfügt des Weiteren über die mit den Wellenlagern 5A, 5B gelagerte Antriebswelle 3. Im Gegensatz zu dem Antriebsstrang aus Fig. 1 ist in dem hier gezeigten Antriebsstrang der Antriebsmotor 1 jedoch direkt mit der Antriebswelle 3 verbunden, wobei die Antriebswelle 1 hier gleichzeitig als Motorausgangswelle 4 des Antriebsmotors 1 dient. Die Kupplung 2 ist abtriebsseitig hinter der E-Maschine 10 angeordnet, wodurch der Antriebsmotor 1 zusammen mit der E-Maschine 10 von dem nicht gezeigten Rest des Antriebsstrangs trennbar ist. Beim Öffnen der Kupplung 2 kann der Antriebsmotor 1 somit ausschließlich zum Antrieb der E-Maschine 10 genutzt werden, welche dann rekuperierend die von dem Antriebsmotor 1 erzeugte Bewegungsenergie in einem nicht gezeigten Energiespeicher, beispielsweise einer Batterie, speichert. Alternativ dazu kann die E-Maschine 10 ausschließlich den Antriebsmotor 1 bei geöffneter Kupplung 2, bevorzugt zum Starten, antreiben.

Der erste Rotorteil 12A verfügt in Fig. 8 über einen, insbesondere aus reibschlüssigen Anfahrkupplungen oder aus der DE 199 43 037 A1 bekannten Torsionsschwingungsdämpfer 21, der die im Betrieb des Antriebsstrangs in der E-Maschine 10 auftretenden Drehmomentspitzen dämpft. Hier besteht der erste Rotorteil 12A somit aus zumindest zwei Hälften und dem Torsionsschwingungsdämpfer, welcher die beiden Hälften miteinander verbindet.

Eine nicht gezeigte Weiterbildung des Antriebsstrangs aus Fig. 8 sieht vor, den Antriebsmotor 1 und die Antriebswelle 3 über eine zweite Kupplung, die gemäß der Kupplung 2 der Fig. 1 in dem Antriebsstrang angeordnet ist, miteinander koppelbar zu gestalten. Hierdurch ist der abtriebseitig hinter der E-Maschine 10 angeordnete Rest des Antriebsstranges wahlweise nur mit dem Antriebsmotor 1 unter Mitschleppen der E-Maschine 10 antreibbar, wobei die Kupplung 2 und die zweite Kupplung geschlossen sind, oder mit dem Antriebsmotor 1 und der E-Maschine 10 antreibbar, wobei die Kupplung 2 und die zweite Kupplung ebenfalls geschlossen sind, oder nur mit der E-Maschine 10 antreibbar, wobei die Kupplung 2 geöffnet ist und die zweite Kupplung geschlossen ist.

In Fig. 1 bis Fig. 8 sind jeweils E-Maschinen 10 in Innenläuferbauart dargestellt, für einen Fachmann ist dabei jedoch klar, dass sich die Erfindung auch auf E-Maschinen 10 in Außenläuferbauart erstreckt. Insbesondere in diesem Fall kann das zweite Rotorteil 12B bei einer Ausbildung der Erfindung gemäß Fig. 2, Fig. 3 oder Fig. 6 statt des dort dargestellten inneren Umfangs auch einen äußeren Umfang, entsprechend dem des dort dargestellten ersten Rotorteils 12A, aufweisen. Dementsprechend kann das erste Rotorteil 12A bei einer Ausbildung der Erfindung gemäß Fig. 2, Fig. 3 oder Fig. 6 statt des dort dargestellten äußeren Umfangs, auch einen inneren Umfang, entsprechend dem des dort dargestellten zweiten Rotorteils 12B, aufweisen.

### Bezugszeichen

- 1: Antriebsmotor
- 2: Kupplung
- 3: Antriebswelle
- 4: Motorausgangswelle
- 5A: Wellenlagerung
- 5B: Wellenlagerung
- 6: Getriebe
- 7: Zahnrad
- 8: Zahnrad
- 9: Vorgelegewelle
- 10: E-Maschine
- 11: Stator
- 12: Rotor
- 12A: erstes Rotorteil
- 12B: zweites Rotorteil
- 13: Rotorlagerung
- 14: Verbindungselement
- 15A: erste Vertiefung
- 15B: zweite Vertiefung
- 16: Ende des Verbindungselements 14
- 17: Verzahnung
- 17A: Zahn
- 17B: Mulde
- 18: weiteres Verbindungselement
- 19A: Ausformung
- 19B: weitere Ausformung
- 20: Flexplate
- 20A: innerer Bereich der Flexplate 20
- 20B: äußerer Bereich der Flexplate 20
- 21: Torsionsschwingungsdämpfer

## Patentansprüche

1. Antriebsstrang für ein Kraftfahrzeug, welcher zumindest aus
- einer drehbaren Antriebswelle (3),
- einem elektrisch oder thermodynamisch betriebenen Antriebsmotor (1), über den die Antriebswelle (3) antreibbar ist und
- einer E-Maschine (10), die einen gehäusefesten Stator (11) und einen mit der Antriebswelle (3) gekoppelt drehbaren Rotor (12) umfasst,
besteht, wobei der Rotor (12) zumindest zweiteilig ausgeführt ist und das erstes Rotorteil (12A) direkt mit der Antriebswelle (3) gekoppelt ist und das zweite Rotorteil (12B) mit dem Stator (11) direkt antreibbar ist und wobei das erste Rotorteil (12A) mit dem zweiten Rotorteil (12B) drehmomentübertragbar und gegeneinander verkippbar gekoppelt ist, **dadurch gekennzeichnet, dass** das zweite Rotorteil (12B) von einer gehäusefesten Rotorlagerung (13) drehbar gestützt und gegenüber dem Stator (11) ausgerichtet ist.

2. Antriebsstrang nach Anspruch 1, **dadurch gekennzeichnet, dass** der Antriebsstrang eine Kupplung (2) aufweist, welche zwischen dem Antriebsmotor (1) und der Antriebswelle (3) angeordnet ist, wobei im geschlossen Zustand der Kupplung (2) ein Drehmoment des Antriebsmotors (1) über die Kupplung (2) auf die Antriebswelle (3) übertragbar ist.

3. Antriebsstrang nach Anspruch 1, **dadurch gekennzeichnet, dass** der Antriebsmotor (1) direkt mit der Antriebswelle (3) gekoppelt ist.

4. Antriebsstrang nach Anspruch 1, **dadurch gekennzeichnet, dass** das erste Rotorteil (12A) stoffschlüssig oder kraftschlüssig mit der Antriebswelle (3) verbunden ist oder einstückig mit der Antriebswelle (3) ausgeführt ist.

5. Antriebsstrang nach Anspruch 1, **dadurch gekennzeichnet, dass** eines der beiden Rotorteile (12A, 12B) an einem äußeren Umfang zumindest eine Vertiefung (15A, 15B) aufweist und dass das andere der beiden Rotorteile (12A, 12B) an einem dem äußeren Umfang des einen Rotorteils (12A, 12B) gegenüberliegenden inneren Umfang ebenfalls zumindest eine Vertiefung (15A, 15B) aufweist, welche der zumindest einen Vertiefung (15A, 15B) des einen Rotorteils (12A, 12B) gegenüberliegt, wobei ein Verbindungselement (14) in die jeweils gegenüberliegenden Vertiefungen (15A, 15B) ragt, welches zumindest gegenüber einer der gegenüberliegenden Vertiefungen (15A, 15B) Spiel aufweist.

6. Antriebsstrang nach Anspruch 1, **dadurch gekennzeichnet, dass** das erste Rotorteil (12A) und das zweite Rotorteil (12B) über eine mit Spiel behaftete Verzahnung (17) miteinander gekoppelt sind.

7. Antriebsstrang nach Anspruch 5 oder 6, **dadurch gekennzeichnet, dass** das Spiel mit einer zumindest elastischen Substanz zumindest zum Teil ausgefüllt ist.

8. Antriebsstrang nach Anspruch 1, **dadurch gekennzeichnet, dass** in dem Rotor (12) ein Torsionsschwingungsdämpfer (21) angeordnet ist.

9. Antriebsstrang nach Anspruch 1, **dadurch gekennzeichnet, dass** zwischen dem ersten und dem zweiten Rotorteil (12A, 12B) eine Drehfederung angeordnet ist.

10. Antriebsstrang nach Anspruch 1, **dadurch gekennzeichnet, dass** zwischen dem ersten Rotorteil (12A) und dem zweiten Rotorteil (12B) eine Flexplate (20) angeordnet ist, welche mit dem ersten und dem zweiten Rotorteil (12A, 12B) jeweils zumindest drehfest verbunden ist.

11. Antriebsstrang nach Anspruch 1, **dadurch gekennzeichnet, dass** das erste und zweite Rotorteil (12A, 12B) über zumindest ein gummielastisches Bauteil miteinander gekoppelt sind.

## Claims

1. Drivetrain for a motor vehicle, comprising at least
- a rotatable drive shaft (3),
- an electrically or thermodynamically driven drive motor (1), by means of which the drive shaft (3) can be driven and
- an electrical machine (10) which comprises a stator (11) fixed to the housing and a rotor (12) which is rotatable in a manner coupled to the drive shaft (3),
wherein the rotor (12) is embodied at least in two parts and the first rotor part (12A) is coupled directly to the drive shaft (3) and the second rotor part (12B) can be driven directly with the stator (11) and wherein the first rotor part (12A) is coupled to the second rotor part (12B) so as to be able to transmit torque and to tilt with respect to one another, **characterized in that** the second rotor part (12B) is rotatably supported by a rotor bearing (13) fixed to the housing and is aligned with respect to the stator (11).

2. Drivetrain according to Claim 1, **characterized in that** the drivetrain has a clutch (2) which is arranged between the drive motor (1) and the drive shaft (3), wherein, in the closed state of the clutch (2), a torque of the drive motor (1) can be transmitted via the clutch (2) to the drive shaft (3).

3. Drivetrain according to Claim 1, **characterized in that** the drive motor (1) is coupled directly to the drive shaft (3).

4. Drivetrain according to Claim 1, **characterized in that** the first rotor part (12A) is connected by material connection or in a non-positive manner to the drive shaft (3) or is embodied integrally with the drive shaft (3).

5. Drivetrain according to Claim 1, **characterized in that** one of the two rotor parts (12A, 12B) has, on an outer circumference, at least one recess (15A, 15B) and that the other of the two rotor parts (12A, 12B), on an inner circumference opposite the outer circumference of one rotor (12A, 12B), also has at least one recess (15A, 15B) which is opposite the at least one recess (15A, 15B) of one rotor part (12A, 12B), wherein a connecting element (14) projects into the respectively opposite recesses (15A, 15B) and has play at least with respect to one of the opposite recesses (15A, 15B).

6. Drivetrain according to Claim 1, **characterized in that** the first rotor part (12A) and the second rotor part (12B) are coupled to one another via a toothing (17) with play.

7. Drivetrain according to Claim 5 or 6, **characterized in that** the play is at least partially filled with an at least elastic substance.

8. Drivetrain according to Claim 1, **characterized in that** a torsional oscillation damper (21) is arranged in the rotor (12).

9. Drivetrain according to Claim 1, **characterized in that** a rotational suspension is arranged between the first and the second rotor part (12A, 12B).

10. Drivetrain according to Claim 1, **characterized in that** a flex-plate (20) is arranged between the first rotor part (12A) and the second rotor part (12B), which flex-plate (20) is in each case at least rotatably fixedly connected to the first and the second rotor part (12A, 12B).

11. Drivetrain according to Claim 1, **characterized in that** the first and second rotor part (12A, 12B) are coupled to one another via at least one rubber-elastic component.

## Revendications

1. Chaîne cinématique pour un véhicule automobile, qui se compose au moins
- d'un arbre d'entraînement rotatif (3),
- d'un moteur d'entraînement (1) à commande électrique ou thermodynamique, par le biais duquel l'arbre d'entraînement (3) peut être entraîné et
- d'une machine électrique (10), qui comprend un stator (11) fixé au boîtier et un rotor (12) rotatif, accouplé à l'arbre d'entraînement (3),
le rotor (12) étant réalisé au moins en deux parties et la première partie de rotor (12A) étant accouplée directement à l'arbre d'entraînement (3) et la deuxième partie de rotor (12B) pouvant être entraînée directement avec le stator (11) et la première partie de rotor (12A) étant accouplée à la deuxième partie de rotor (12B) de manière à pouvoir transmettre un couple et de manière à pouvoir basculer l'une par rapport à l'autre, **caractérisée en ce que** la deuxième partie de rotor (12B) est orientée de manière supportée à rotation par un support sur palier de rotor (13) fixé au boîtier et par rapport au stator (11).

2. Chaîne cinématique selon la revendication 1, **caractérisée en ce que** la chaîne cinématique présente un embrayage (2) qui est disposé entre le moteur d'entraînement (1) et l'arbre d'entraînement (3), un couple du moteur d'entraînement (1) pouvant être transmis par le biais de l'embrayage (2) à l'arbre d'entraînement (3) dans l'état fermé de l'embrayage (2).

3. Chaîne cinématique selon la revendication 1, **caractérisée en ce que** le moteur d'entraînement (1) est accouplé directement à l'arbre d'entraînement (3).

4. Chaîne cinématique selon la revendication 1, **caractérisée en ce que** la première partie de rotor (12A) est connectée par engagement par liaison de matière ou par force à l'arbre d'entraînement (3) ou est réalisée d'une seule pièce avec l'arbre d'entraînement (3).

5. Chaîne cinématique selon la revendication 1, **caractérisée en ce que** l'une des deux parties de rotor (12A, 12B) présente, sur une périphérie extérieure, au moins un renfoncement (15A, 15B) et **en ce que** l'autre des deux parties de rotor (12A, 12B) présente également au moins un renfoncement (15A, 15B) sur une périphérie intérieure opposée à la périphérie extérieure de la première partie de rotor (12A, 12B), le renfoncement (15A, 15B) étant opposé à l'au moins un renfoncement (15A, 15B) de la première partie de rotor (12A, 12B), un élément de liaison (14) pénétrant dans les renfoncements (15A, 15B) mutuellement opposés, et présentant au moins un jeu par rapport à l'un des renfoncements opposés (15A, 15B).

6. Chaîne cinématique selon la revendication 1, **caractérisée en ce que** la première partie de rotor (12A) et la deuxième partie de rotor (12B) sont accouplées l'une à l'autre par le biais d'une denture (17) avec un jeu.

7. Chaîne cinématique selon la revendication 5 ou 6, **caractérisée en ce que** le jeu est au moins en partie rempli avec une substance au moins élastique.

8. Chaîne cinématique selon la revendication 1, **caractérisée en ce qu'**un amortisseur d'oscillations de torsion (21) est disposé dans le rotor (12).

9. Chaîne cinématique selon la revendication 1, **caractérisée en ce qu'**entre la première et la deuxième partie de rotor (12A, 12B) est disposée une suspension à ressort rotative.

10. Chaîne cinématique selon la revendication 1, **caractérisée en ce qu'**entre la première partie de rotor (12A) et la deuxième partie de rotor (12B) est disposée une plaque flexible (20) qui est connectée à chaque fois au moins de manière solidaire en rotation à la première et à la deuxième partie de rotor (12A, 12B).

11. Chaîne cinématique selon la revendication 1, **caractérisée en ce que** la première et la deuxième partie de rotor (12A, 12B) sont accouplées l'une à l'autre par le biais d'au moins un composant ayant l'élasticité du caoutchouc.
